# EUROPÄISCHE PATENTSCHRIFT

(11) **EP 2 014 155 B1**
(45) Veröffentlichungstag und Bekanntmachung des Hinweises auf die Patenterteilung: **03.11.2010**
(21) Anmeldenummer: 08001418.6
(22) Anmeldetag: 25.01.2008
(51) Int. Cl.: A01J 25/12, A01J 27/04, A01J 27/00, A23C 19/08

(54) **Verfahren zur Herstellung von Käsescheiben, hierdurch hergestellte Käsescheiben sowie eine Vorrichtung zur Durchführung des Verfahrens**
Method for producing cheese slices, cheese slices produced thereby and a device for carrying out the method
Procédé destiné à la fabrication de tranches de fromage, tranches de fromage ainsi fabriquées et dispositif d'exécution du procédé

(30) Priorität: 21.02.2007 DE 102007008541
(43) Veröffentlichungstag der Anmeldung: 14.01.2009
(73) Patentinhaber: Hochland AG, 88178 Heimenkirch/Allgäu (DE)
(72) Erfinder: Morent, Walter, 88171 Weiler-Simmerberg (DE); Breuss, Günther, 88178 Heimenkirch (DE)
(74) Vertreter: Laufhütte, Dieter

(56) Entgegenhaltungen:
- DE-A1- 10 026 776
- JP-A- 56 064 748
- US-A- 2 361 775
- US-A- 5 885 642
- US-A- 5 958 492
- US-B1- 6 579 550

## Beschreibung

Die Erfindung betrifft ein Verfahren zur Herstellung von Käsescheiben, hierdurch hergestellte Käsescheiben sowie eine Vorrichtung zur Durchführung des Verfahrens.

Es ist grundsätzlich bereits bekannt, Käsescheiben aus Schmelzkäse herzustellen. Hierzu wird Schmelzkäse auf ein Kühl-Walzensystem aufgebracht, mittels dem der Schmelzkäse gewalzt, geglättet und gekühlt wird. Nach entsprechendem Abkühlen des Schmelzkäses wird das auf den Walzen gebildete Käseband in Streifen geschnitten. Anschließend werden diese aufeinander mit entsprechender Beölung abgelegt und auch noch in einer eigenen Schneidstation der Länge nach geschnitten, so dass die Käsescheibe in ihrer endgültigen Größe gebildet werden. Die so gebildeten Käsescheiben werden anschließend in einer dazu geeigneten Vorrichtung verpackt.

Grundsätzlich ist es bereits bekannt, Käse und Käseerzeugnisse mit Bild- oder Schriftzeichen zu versehen. So ist beispielsweise aus der EP 258 632 A2 ein Verfahren zum Erzeugen von Bild- oder Schriftzeichen auf Käse und Käseerzeugnissen beschrieben. Hierzu wird bei dem dort beschriebenen Verfahren eine Verfärbung in einer Randzone des Käses durch örtlich begrenzte Wärmeentwicklung vorbestimmter Dauer mit einer zwischen der Plastizitätstemperatur und der Verbrennungstemperatur liegenden Behandlungstemperatur erzeugt. Die entsprechende Wärme wird über einen Stempel eingebracht, der in den Käse eingedrückt wird.

Aus der EP 090 737 B1 wiederum ist ein Verfahren zur Herstellung eines Käses bekannt, das darin besteht, den Käse mit einer Verzierung zu versehen. Hier wird die Verfärbung der Konturen durch das Wachstum unterschiedlicher Organismen erzeugt.

Schließlich ist aus der DE 38 36 821 C3 ein Verfahren zum Aufbringen eines Bildes auf ein Lebensmittel beschrieben, bei dem das Bild ebenfalls über eine Wärmebehandlung erzeugt wird.

Aus der US 6,579,550 B1 ist ein Verfahren zur Herstellung von Käsescheiben bekannt, das in einem ersten Verfahrensschritt das Glattwalzen einer ersten teigähnlichen Masse vorsieht. In das teigähnlichen Band werden mittels einer Profilrolle Motive geprägt und die Masse mittels einer Kühlrolle abgekühlt. Weiterhin wird eine zweite teigähnliche Masse hinzugeführt, die mittels einer zweiten Walze ebenfalls geglättet wird. Die entstandene Masse wird anschließend in einzelne Scheiben geschnitten, welche aufeinander gestapelt werden können.

Die DE 100 26 776 A1 offenbart ebenfalls ein Verfahren zur Herstellung einer Scheibe eines Lebensmittels, insbesondere eines gelochten Schmelzkäses, wobei das Lebensmittel als teigige Masse mittels einer Walze ausgewalzt und nachfolgend durch ein Schneidewerkzeug in die Form einer Scheibe gebracht wird. Weiterhin weist die Scheibe Ausnehmungen auf, die als Löcher oder Randausschnitt in der Scheibe verbleiben.

Das aus der US 5,885,642 bekannte Verfahren zur Herstellung von Lebensmittelscheiben, wie beispielsweise Käsescheiben, sieht ein Förderband vor, auf dem eine teigähnliche Masse aufgetragen wird und dieser mittels einer Prägerolle ein Motiv auf der Ober- und/oder Unterseite aufgeprägt wird.

Aus der US 5,958,492 ist ein Verfahren zum Aufprägen von Motiven auf ein Lebensmittelband bzw. zum Ausschneiden bestimmter Lebensmittelformen aus einem Lebensmittelband bekannt. Dabei wird das Lebensmittelband durch zwei gegenüber angeordnete Prägerollen geführt.

Aufgabe der vorliegenden Erfindung ist es, ein Verfahren zur Herstellung von Käsescheiben zu schaffen, bei dem beliebige Motive auf die Käsescheibe aufgebracht werden.

Erfindungsgemäß wird dieses Verfahren durch die Kombination der Verfahrensschritte gemäß Anspruch 1 gelöst.

Demnach besteht ein Verfahren zur Herstellung von Käsescheiben aus folgenden Schritte:
- Auftragen von Schmelzkäse auf eine Walze,
- Walzen und Glätten des aufgetragenen Schmelzkäses,
- Prägen von Motiven in den noch weichen, teigigen Schmelzkäse,
- weiterführen und gleichzeitiges Kühlen des Käsebandes über ein Walzensystem,
- Schneiden des Käsebandes in mehrere parallele Bahnen,
- Ablegen der Bahnen übereinander auf einem Transportband als gestapelte Bahnen,
- Zuführen der gestapelten Bahnen zu einer Schneidvorrichtung und
- längengenaues Schneiden der gestapelten Bahnen in einzelne Stapel.

Erfindungsgemäß wird bei diesem Verfahren das Bild dadurch erzeugt, dass das entsprechend gewünschte Motiv in den noch weichen, teigigen Schmelzkäse auf dem Walzensystem eingeprägt wird.

Besondere Ausgestaltungen der Erfindung ergeben sich aus den sich an den Hauptanspruch anschließenden Unteransprüchen.

Gemäß einer ersten Ausgestaltung der Erfindung kann die Prägung mittels einer anstellbaren drehzahlgesteuerten Prägewalze erfolgen.

Um eine hohe Produktivität zu erhalten, werden in die parallelen Bahnen des Käsebandes über die einzelnen Motivwalzen der Prägewalze Motive eingeprägt.

Vorteilhaft können die geschnittenen parallelen Bahnen des Käsebandes motivgenau auf das Transportband gestapelt werden.

Die gestapelten Bahnen können dann der Länge nach motivgenau in einzelne Stapel geschnitten werden.

Vorteilhaft wird zur Einstellung des motivgenauen Schneidens die Position des Motivs nach dem Prägen durch Sensoren erfaßt. Entsprechend der aufgenommenen Motivpositionen wird dann die Schneideinrichtung zum motivgenauen Schneiden in einer Regelung positioniert.

Besonders vorteilhaft wird in der Regelung noch der jeweilige Gewichtswerte der Käsescheiben berücksichtigt.

Die eingangs genannte Aufgabe wird auch durch eine Vorrichtung des vorgenannten Verfahrens gelöst. Hierzu wird entsprechend Anspruch 8 mindestens ein Walzensystem zum Auftragen, Walzen und Glätten sowie Kühlen von teigigem Schmelzkäse vorgesehen. Weiterhin kommt eine anstellbare Prägewalze zum Einsatz. Eine erste Schneideinrichtung zum Schneiden des Käsebandes in parallele Bahnen ist an das Walzensystem anstellbar. Unter dem Walzensystem ist ein Transportband zum Abtransport der übereinander in Stapeln abgelegten Bahnen angeordnet. Das Transportband transportiert die übereinander gestapelten Käsebahnen zu einer zweiten Schneidvorrichtung, die zum längengenauen Schneiden der Stapel dient.

Bevorzugt besteht die Prägewalze aus mehreren nebeneinander angeordneten Motivwalzen.

Auf den Motivwalzen ist das Motiv in komprimierter Form aufgebracht, da hierdurch die Scheibendehnung der Scheiben in Längsrichtung während des weiteren Produktionsverlaufs des Käses kompensiert werden kann.

Vorteilhaft kann die Prägewalze über einen separaten drehzahlgesteuerten Motor antreibbar sein.

Der Motor kann ein Schrittmotor, ein Getriebemotor oder ein Servomotor sein.

Um ein Anhaften des Schmelzkäses an den Motivwalzen zu verhindern, sind diese vorzugsweise aus Kunststoff, ganz besonders bevorzugt aus PTFE oder einem anderen Material mit PTFE Beschichtung, hergestellt.

Vorteilhaft weist die Prägewalze eine feinjustierbare Tiefenzustellung auf, um hier je nach Konsistenz des Schmelzkäses ein deutliches Bild zu erzeugen.

Von ganz besonderem Vorteil ist es, dass die Prägewalze zum Motivwechsel einfach auswechselbar ist.

Vorteilhaft kann das jeweilige Motiv auf der Motivwalze derart komprimiert aufgebracht sein, dass es sich nach Aufbringen auf das Käseband durch Längsausdehnung des Käsebandes in die gewünschte Endform ausdehnt. Alternativ kann dieser Effekt auch durch die Steuerung des drehzahlgesteuerten Motors erzeugt werden.

Schließlich betrifft die Erfindung Käsescheiben, die nach dem vorgenannten Verfahren hergestellt werden mit einem eingeprägten Motiv.

Weitere Merkmale, Einzelheiten und Vorteile der Erfindung werden anhand eines in der Zeichnung dargestellten Ausführungsbeispiels näher erläutert. Es zeigen:
- Figur 1:: eine schematische Darstellung einer Vorrichtung zur Durchführung des erfindungsgemäßen Verfahrens zur Herstellung einer Käsescheibe in einer Darstellung von der Seite,
- Figur 2:: die Vorrichtung gemäß Figur 1 in einer Darstellung von vorne,
- Figur 3:: die Vorrichtung gemäß Figur 1 in einer Darstellung von hinten und
- Figur 4:: ein Detail der Darstellung gemäß Figur 1.

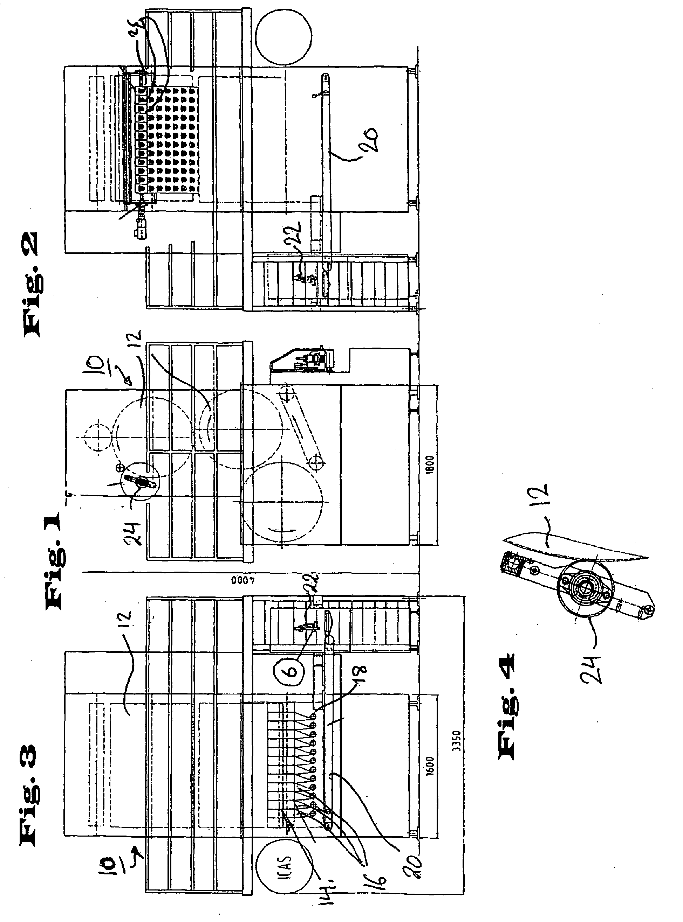

In den Figuren 1 bis 4 ist lediglich schematisch eine Vorrichtung 10 dargestellt, die zur Herstellung von Käsescheiben, vorzugsweise Schmelzkäsescheiben, dient. Grundsätzlich ist eine derartige Vorrichtung schon aus dem Stand der Technik bekannt und wird daher hier nur in den wesentlichen Grundzügen dargelegt. Die Vorrichtung 10 weist ein Walzensystem 12 auf, auf dessen Oberfläche der Schmelzkäse aufgetragen, gewalzt und geglättet wird. Hierdurch entsteht auf der Walzenoberfläche des Walzensystems 12 ein hier nicht näher dargestelltes Käseband. Das sich über die gesamte Breite des Walzensystems 12 erstreckende Käseband wird über ein hier nur schematisch dargestelltes Messersystem 14 in parallele Bahnen 16 geschnitten, die über Umlenkwalzen 18 derart auf einem Transportband 20 abgelegt werden, dass die gestapelten geschnittenen Bahnen übereinander auf dem Transportband 20 liegen.

Über das Transportband 20 werden die entsprechenden Bahnen seitlich um zu einer Querschneidstation 22 mit einer zweiten Schneidvorrichtung transportiert, in welcher die übereinander gestapelten Bahnen der Länge nach zu einem Käsescheibenstapel geschnitten werden. Anschließend werden die einzelnen Käsescheiben in an sich bekannter Art und Weise verpackt. Dieser Arbeitsschritt ist in den vorliegenden Figuren nicht mehr dargestellt.

Gemäß der vorliegenden Erfindung werden in den noch weichen, teigigen Schmelzkäse Motive eingeprägt. Dieses Motiveinprägen erfolgt durch eine Prägewalze 24, bei der, wie sich aus Figur 2 ergibt, eine Vielzahl von Motivwalzen 26 nebeneinander angeordnet sind. Im hier dargestellten Ausführungsbeispiel sind zwölf Motivwalzen nebeneinander angeordnet. Es können aber auch beliebig mehr oder weniger Motivwalzen zu einer Prägewalze zusammengefaßt sein.

Die Prägewalze 24, die in Figur 4 vergrößert dargestellt ist, ist so konzipiert, dass durch eine feinjustierbare Tiefenzustellung (hier nicht im einzelnen dargestellt) verschiedene Prägetiefen ermöglicht werden. Die Prägewalze kann zur Reinigung oder zur Herstellung von Standardprodukten ohne Prägung hochgeschwenkt und in der hochgeschwenkten Stellung arretiert werden (ebenfalls hier nicht dargestellt). Das Prägesystem wird mit einem separaten, drehzahlgesteuerten Motor, beispielsweise einem Getriebemotor oder aber auch einem Schrittmotor, angetrieben. Die Prägewalze ist derart aufgebaut, dass ein schneller Wechsel der kompletten Motivwalzen möglich ist. Hierdurch kann ein einfacher Formatwechsel für verschiedene Motivreihen erfolgen. Damit den Motivwalzen das noch weiche und teigige Schmelzkäseprodukt nicht anhaftet, wird es aus einem besonderen Material, nämlich einem PTFE-Kunststoff hergestellt.

Um ein längengenaues, motivzentriertes Schneiden der einzelnen Käsescheiben zu gewährleisten, ist erfindungsgemäß eine Regelung in der Vorrichtung 10 vorgesehen. Hierzu wird in einem ersten Schritt die genaue Position des Motivs auf der aufgestapelten Käsebahn erfaßt. Nach dem Start des Schneidens in Querrichtung wird über eine "Plus-/Minusregelung" zentriert geschnitten. Bei der Regelung kann als weiterer Parameter die Einhaltung von vorgegebenen Gewichtswerten des Produktes berücksichtigt werden.

Um beim Ablegen der Käsebahnen auf dem Förderband 20 ein genaues Übereinanderlegen der Motive zu gewährleisten, müssen die Schneidräder der ersten Schneidvorrichtung 14 frei von jeglichem Spiel sein. Zusätzlich müssen die Scheiben die gleich Länge und Breite haben.

## Patentansprüche

1. Verfahren zur Herstellung von Käsescheiben mit folgenden Schritten:
- Auftragen von Schmelzkäse auf eine Walze,
- Walzen und Glätten des aufgetragenen Schmelzkäses,
- Prägen von Motiven über einzelne Motivwalzen einer Prägewalze in parallele Bahnen eines Käsebandes des noch weichen, teigigen Schmelzkäses,
- Weiterführen und gleichzeitiges Kühlen des Käsebandes über ein Walzensystem,
- Längsschneiden des Käsebandes in mehrere parallele Bahnen,
- motivgenaues Ablegen der Bahnen übereinander auf einem Transportband als gestapelte Bahnen,
- Zuführen der gestapelten Bahnen zu einer Schneidvorrichtung und
- längengenaues Querschneiden der gestapelten Bahnen in einzelne Stapel.

2. Verfahren nach Anspruch 1, **dadurch gekennzeichnet, dass** die Prägung mittels einer anstellbaren drehzahlgesteuerten Prägewalze einseitig erfolgt.

3. Verfahren nach Anspruch 1 oder 2, **dadurch gekennzeichnet, dass** in die parallelen Bahnen des Käsebandes über die einzelnen Motivwalzen der Prägewalze Motive eingeprägt werden.

4. Verfahren nach einem der Ansprüche 1 bis 3, **dadurch gekennzeichnet, dass** die gestapelten Bahnen der Länge nach motivgenau in einzelne Stapel geschnitten werden.

5. Verfahren nach Anspruch 4, **dadurch gekennzeichnet, dass** zur Einstellung des motivgenauen Schneidens die Position des Motivs nach dem Prägen durch Sensoren erfaßt wird und dass nach den aufgenommenen Motivpositionen die Schneideinrichtung zum motivgenauen Schneiden in einer Regelung positioniert wird.

6. Verfahren nach Anspruch 5, **dadurch gekennzeichnet, dass** in der Regelung die Gewichtswerte der Käsescheiben berücksichtigt werden.

7. Vorrichtung zur Durchführung des Verfahrens nach einem der Ansprüche 1 bis 6, mit
mindestens einem Walzensystem zum Auftragen, Walzen und Glätten sowie Kühlen von teigigem Schmelzkäse,
einer anstellbaren Prägewalze,
einer ersten Längsschneideinrichtung zum Schneiden des Käsebandes in parallele Bahnen,
ein Transportband zum Abtransport der übereinander in Stapeln abgelegten Bahnen,
einer zweiten Querschneidvorrichtung zum längengenauen Schneiden der Stapel.

8. Vorrichtung nach Anspruch 7, **dadurch gekennzeichnet, dass** die Prägewalze aus mehreren nebeneinander angeordneten Motivwalzen besteht.

9. Vorrichtung nach Anspruch 8, **dadurch gekennzeichnet, dass** die Motivwalzen mehrere unterschiedliche Motive auf Umfang aufweisen.

10. Vorrichtung nach Anspruch 8 oder 9, **dadurch gekennzeichnet, dass** die Prägewalze über einen separaten drehzahlgesteuerten Motor antreibbar ist.

11. Vorrichtung nach Anspruch 10, **dadurch gekennzeichnet, dass** der Motor ein Schrittmotor, Getriebemotor oder Servomotor ist.

12. Vorrichtung nach einem der Ansprüche 7 bis 11, **dadurch gekennzeichnet, dass** die Motivwalzen aus Kunststoff, vorzugsweise PTFE, oder aus Kunststoff, vorzugsweise PTFE beschichtetem Edelstahl, bestehen.

13. Vorrichtung nach einem der Ansprüche 7 bis 12, **dadurch gekennzeichnet, dass** die Prägewalze eine feinjustierbare Tiefenzustellung aufweist.

14. Vorrichtung nach einem der Ansprüche 7 bis 13, **dadurch gekennzeichnet, dass** die Prägewalze zum Motivwechsel auswechselbar ist.

15. Vorrichtung nach einem der Ansprüche 7 bis 14, **dadurch gekennzeichnet, dass** das jeweilige Motiv auf der Motivwalze derart komprimiert aufgebracht ist, dass es sich nach Aufbringen auf das Käseband durch Längsausdehnung des Käsebandes in die gewünschte Endform ausdehnen kann.

## Claims

1. Method for producing cheese slices having the following steps:
- applying processed cheese to a roller,
- rolling and smoothing the applied processed cheese,
- embossing patterns by means of individual pattern rollers of an embossing roller into parallel strips of a cheese layer of the still-soft, doughy processed cheese,
- further conveying and simultaneously cooling the cheese layer via a roller system,
- longitudinally cutting the cheese layer into a plurality of parallel strips,
- placing the strips one on top of another, precisely according to the pattern, on a conveyor belt as stacked strips,
- sending the stacked strips to a cutting device and
- precisely cutting to length the stacked strips in the transverse direction to form individual stacks.

2. Method as claimed in claim 1, **characterised in that** the embossing is effected on one side by means of a movable embossing roller which is controlled with respect to rotational speed.

3. Method as claimed in claim 1 or 2, **characterised in that** patterns are embossed into the parallel strips of the cheese layer by means of the individual pattern rollers of the embossing roller.

4. Method as claimed in any one of claims 1 to 3, **characterised in that** the stacked strips are cut to length to form individual stacks precisely according to the pattern.

5. Method as claimed in claim 4, **characterised in that** in order to set the precise pattern-matching cutting, the position of the pattern is detected by sensors after embossing and that according to the received pattern positions, the cutting device is positioned in such an adjustment setting so as to cut precisely according to the pattern.

6. Method as claimed in claim 5, **characterised in that** the weight values of the cheese slices are also considered when adjusting the setting.

7. Device for carrying out the method as claimed in any one of claims 1 to 6, having
at least one roller system to apply, roll and smooth, as well as cool, doughy processed cheese,
a movable embossing roller,
a first longitudinal cutting device for cutting the cheese layer into parallel strips,
a conveyor belt to carry away the strips which are laid one on top of another in stacks,
a second transverse cutting device which serves to cut the stacks precisely to length.

8. Device as claimed in claim 7, **characterised in that** the embossing roller consists of a plurality of pattern rollers disposed next to each other.

9. Device as claimed in claim 8, **characterised in that** the embossing rollers have a plurality of different patterns on the periphery.

10. Device as claimed in claim 8 or 9, **characterised in that** the pattern roller can be driven by a separate motor, the rotational speed of which is controlled.

11. Device as claimed in claim 10, **characterised in that** the motor can be a stepping motor, a geared motor or a servo motor.

12. Device as claimed in any one of claims 7 to 11, **characterised in that** the pattern rollers consist of synthetic material, preferably PTFE, or of synthetic material, preferably stainless steel coated with PTFE.

13. Device as claimed in any one of claims 7 to 12, **characterised in that** the embossing roller has a finely adjustable depth setting.

14. Device as claimed in any one of claims 7 to 13, **characterised in that** the embossing roller can be changed in order to change the pattern.

15. Device as claimed in any one of claims 7 to 14, **characterised in that** the respective pattern is applied to the pattern roller compressed in such a way that, after application to the cheese layer, it can expand into the desired final form by longitudinal expansion of the cheese layer.

## Revendications

1. Procédé pour la réalisation de tranches de fromage, comportant les étapes suivantes:
- pose du fromage à pâte fondue sur un cylindre,
- laminage et lissage du fromage à pâte fondue déposé,
- estampage de motifs, au moyen des différents rouleaux à motifs d'un cylindre d'estampage, dans des lés parallèles d'une bande de fromage à pâte fondue pâteux encore mou,
- transport et refroidissement simultané de la bande de fromage au moyen d'un système de cylindres,
- coupe longitudinale de la bande de fromage en plusieurs lés parallèles,
- pose des lés les uns sur les autres, exactement motif sur motif, sur une bande transporteuse pour obtenir des lés empilés,
- acheminement des lés empilés vers un dispositif de coupe, et
- coupe à longueur exacte des lés empilés pour former des piles individuelles.

2. Procédé selon la revendication 1, **caractérisé en ce que** l'estampage est réalisé sur une face au moyen d'un cylindre d'estampage réglable, à vitesse de rotation commandée.

3. Procédé selon la revendication 1 ou 2, **caractérisé en ce que** des motifs sont estampés dans les lés parallèles de la bande de fromage au moyen des différents rouleaux à motifs du cylindre d'estampage;

4. Procédé selon l'une quelconque des revendications 1 à 3, **caractérisé en ce que** les lés empilés sont coupés à longueur exactement motif par motif pour former des piles individuelles.

5. Procédé selon la revendication 4, **caractérisé en ce que** pour le réglage de la coupe exactement motif par motif, la position du motif après l'estampage est détectée par des capteurs et **en ce que**, selon les positions enregistrées des motifs, le dispositif de coupe est positionné selon un réglage pour la coupe exactement motif par motif.

6. Procédé selon la revendication 5, **caractérisé en ce que** les valeurs de poids des tranches de fromage sont également prises en compte dans le réglage.

7. Dispositif destiné à la mise en oeuvre du procédé selon l'une quelconque des revendications 1 à 6, comportant
au moins un système de cylindres pour appliquer, laminer et lisser, ainsi que pour refroidir du fromage à pâte fondue pâteux,
un cylindre d'estampage réglable,
un premier dispositif de coupe longitudinale pour couper la bande de fromage en lés parallèles,
une bande transporteuse pour évacuer les lés déposés en piles les uns sur les autres,
un deuxième dispositif de coupe transversale pour la coupe à longueur exacte des piles.

8. Dispositif selon la revendication 7, **caractérisé en ce que** le cylindre d'estampage est formé par plusieurs rouleaux à motifs, disposés les uns à côté des autres.

9. Dispositif selon la revendication 8, **caractérisé en ce que** les rouleaux à motifs comportent sur le pourtour plusieurs motifs différents.

10. Dispositif selon la revendication 8 ou 9, **caractérisé en ce que** le cylindre d'estampage est propre à être actionné par un moteur séparé à vitesse de rotation commandée.

11. Dispositif selon la revendication 10, **caractérisé en ce que** le moteur est un moteur pas à pas, un motoréducteur ou un servomoteur.

12. Dispositif selon l'une quelconque des revendications 7 à 11, **caractérisé en ce que** les rouleaux à motifs sont réalisés en matière plastique, de préférence en PTFE, ou en acier inoxydable revêtu de matière plastique, de préférence du PTFE.

13. Dispositif selon l'une quelconque des revendications 7 à 12, **caractérisé en ce que** le cylindre d'estampage comporte un réglage de profondeur ajustable avec précision.

14. Dispositif selon l'une quelconque des revendications 7 à 13, **caractérisé en ce que** le cylindre d'estampage peut être remplacé en vue d'un changement de motif.

15. Dispositif selon l'une quelconque des revendications 7 à 14, **caractérisé en ce que** chaque motif sur le rouleau à motifs est appliqué sous forme comprimée, de telle sorte que, après l'application sur la bande de fromage, il peut se dilater dans la forme finale souhaitée sous l'effet de la dilatation en longueur de la bande de fromage.
